# EUROPEAN PATENT APPLICATION

(11) **EP 4 064 782 A1**
(43) Date of publication of application: **28.09.2022**
(21) Application number: 20890558.8
(22) Date of filing: 20.11.2020
(51) Int. Cl.: H04W 72/14, H04W 72/04

(54) **TERMINAL, WIRELESS COMMUNICATION METHOD, BASE STATION, AND SYSTEM**

(30) Priority: 20.11.2019 JP 2019210013
(71) Applicant: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP)
(74) Representative: Hoffmann Eitle
(86) International application number: PCT/JP2020/043438
(87) International publication number: WO 2021/100861

(57) **Abstract**

In a future radio communication system, communication can be appropriately controlled even when at least one of a new DCI format and priority setting is supported. A terminal according to one aspect of the present disclosure includes a control section that controls monitoring on both of a first downlink control information (DCI) format and a second DCI format used for scheduling of an uplink shared channel, and a transmitting section that transmits the uplink shared channel based on at least one of the first DCI format and the second DCI format, and in a case where a first priority or a second priority lower than the first priority is configured for the uplink shared channel, scheduling of at least an uplink shared channel having a given priority is supported by the first DCI format and the second DCI format.

## Description

### Technical Field

The present disclosure relates to a terminal, a radio communication method, a base station, and a system in a next-generation mobile communication system.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In existing LTE systems (for example, LTE Rel. 8 to 15), a user terminal (User Equipment (UE)) transmits uplink control information (UCI) by using at least one of a UL data channel (for example, Physical Uplink Shared Channel (PUSCH)) and a UL control channel (for example, a PUCCH (Physical Uplink Control Channel).

For example, the UCI may include retransmission control information (also referred to as Hybrid Automatic Repeat reQuest Acknowledgment (HARQ-ACK), ACK/NACK, A/N, etc.) for downlink shared channel (Physical Downlink Shared Channel (PDSCH), scheduling request (SR), channel state information (CSI), and the like.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

Future radio communication systems (e.g., 5G or NR) are expected to involve a plurality of types of communication (also referred to as traffic types, use cases, services, communication types, and the like) under different required conditions (requirements, communication requirements) examples of which include: higher speed and larger capacity (eMBB: enhanced Mobile Broad Band, for example), a massive amount of terminals (mMTC: massive Machine Type Communication, for example), and ultrahigh reliability and low latency (URLLC: Ultra Reliable and Low Latency Communications, for example). The requirement may be any requirement related to at least one of latency, reliability, capacity, speed, and performance, for example.

In the NR after Rel-16, it is assumed that a downlink control information format (for example, a new DCI format) used for a schedule of a signal or a channel corresponding to a predetermined traffic type or requirement is supported. Furthermore, it is assumed that priority of a signal or a channel is set for each predetermined traffic type or requirement.

However, how the newly supported new DCI formats or priorities should be controlled has not been sufficiently studied.

Therefore, an object of the present disclosure is to provide a terminal, a radio communication method, a base station, and a system that can appropriately control communication even when at least one of a new DCI format and priority setting is supported in a future radio communication system.

### Solution to Problem

A terminal according to one aspect of the present disclosure includes a control section that controls monitoring on both of a first downlink control information (DCI) format and a second DCI format used for scheduling of an uplink shared channel, and a transmitting section that transmits the uplink shared channel based on at least one of the first DCI format and the second DCI format, in which, in a case where a first priority or a second priority lower than the first priority is configured for the uplink shared channel, scheduling of at least an uplink shared channel having a given priority is supported by the first DCI format and the second DCI format.

### Advantageous Effects of Invention

According to one aspect of the present disclosure, communication can be appropriately controlled even when at least one of a new DCI format and priority setting is supported.

### Brief Description of Drawings

Fig. 1 is a diagram illustrating an example of a DCI format for scheduling a shared channel with a given priority.
Fig. 2 is a diagram illustrating another example of a DCI format for scheduling a shared channel with a given priority.
Fig. 3 is a diagram illustrating an example of processing time based on priority of a shared channel.
Fig. 4 is a diagram illustrating another example of processing time based on priority of a shared channel.
Fig. 5 is a diagram illustrating another example of processing time based on priority of a shared channel.
Fig. 6 is a diagram illustrating an example of a schematic configuration of a radio communication system according to an embodiment.
Fig. 7 is a diagram illustrating an example of a configuration of a base station according to an embodiment.
Fig. 8 is a diagram illustrating an example of a configuration of a user terminal according to an embodiment.
Fig. 9 is a diagram illustrating an example of a hardware configuration of a base station and a user terminal according to an embodiment.

### Description of Embodiments

### <Traffic Type>

Future radio communication systems (for example, NR) are expected to involve traffic types (also referred to as services, service types, communication types, use cases, or the like) such as an enhanced mobile broadband (eMBB), machine type communications that embody multiple simultaneous connection (for example, massive machine type communications (mMTC), and Internet of Things (IoT)), and ultra-reliable and low-latency communications (URLLC). For example, it is required that the URLLC have smaller latency and higher reliability than the eMBB.

The traffic type may be identified in a physical layer based on at least one of the followings.
- Logical channels with different priorities
- Modulation and coding scheme (MCS) table (MCS index table)
- Channel quality indication (CQI) table
- DCI format
- System information-radio network temporary identifier (RNTI) used for scrambling (masking) of cyclic redundancy check (CRC) bit included in (added to) the DCI

### (DCI format)

- Radio resource control (RRC) parameter
- Specific RNTI (for example, RNTI for URLLC, MCS-C-RNTI, or the like)
- Search Space
- Predetermined field in DCI (for example, newly added field or reuse of existing field)

Specifically, a traffic type of the HARQ-ACK for a PDSCH may be determined based on at least one of the following.
- MCS index table used to determine at least one of the modulation order, target code rate, and transport block size (TBS) of the PDSCH (for example, whether to use MCS index table 3)
- RNTI used for CRC scrambling of DCI used for scheduling the PDSCH (for example, whether CRC scrambled with C-RNTI or MCS-C-RNTI)

A traffic type of the SR may be determined based on an upper layer parameter used as an SR identifier (SR-ID). The upper layer parameter may indicate whether the traffic type of the SR is eMBB or URLLC.

A traffic type of the CSI may be determined based on configuration information regarding the CSI report (CSIreportSetting), the DCI type used for triggering, a DCI transmission parameter, or the like. The configuration information, the DCI type, and the like may indicate whether the traffic type of the CSI is eMBB or URLLC. The configuration information may be an upper layer parameter.

A traffic type of a physical uplink shared channel (PUSCH) may be determined based on at least one of the followings.
- MCS index table used to determine at least one of modulation order, target coding rate, or transport block size (TBS) of the PUSCH (for example, whether or not to use MCS index table 3).
- RNTI used for CRC scrambling of DCI used for scheduling of the PUSCH (for example, whether CRC scrambling is performed using C-RNTI or using MCS-C-RNTI)

The traffic type may be associated with communication requirements (requirements such as latency and error rate), a data type (voice, data, or the like), or the like.

URLLC requirements and eMBB requirements may be different in that the URLLC is lower in latency than the eMBB or the URLLC requirements include a reliability requirement.

For example, eMBB user (U)-plane latency requirements may include that downlink U-plane latency is 4 ms and that uplink U-plane latency is 4 ms. On the other hand, URLLC U-plane latency requirements may include that downlink U-plane latency is 0.5 ms and that uplink U-plane latency is 0.5 ms. Furthermore, the URLLC reliability requirements may include that a 32-byte error rate is 10⁻⁵ for a U-plane latency of 1 ms.

In contrast, enhancement of the reliability of traffic for unicast data is mainly studied as enhanced ultra reliable and low latency communications (eURLLC). Hereinafter, in a case where URLLC and eURLLC are not distinguished, they are simply referred to as URLLC.

### <DCI Format>

As described above, in the NR, it is assumed that communication corresponding to a plurality of services (also referred to as a use case, a traffic type, and the like) having different requirements is performed in the same cell.

Therefore, in the NR, it is considered to introduce a new DCI format separately from the existing DCI format (for example, DCI formats 1_0, 1_1, 0_0, and 0_1) as the DCI format used for scheduling of the physical shared channel (for example, PDSCH, PUSCH).

A new DCI format used for scheduling the PDSCH may be referred to as a DCI format 1_2 or the like. A new DCI format used for scheduling the PUSCH may be referred to as a DCI format 0_2 or the like. These new DCI formats may be used for scheduling the PDSCH or PUSCH corresponding to specific traffic types or requirements (for example, URLLC or the like).

The name of the new DCI format is not limited thereto. For example, the name of the new DCI format for scheduling the PDSCH and the PUSCH may be obtained by replacing "2" of the DCI format 1_2 and the DCI format 0_2 with an arbitrary character string other than "0" and "1", or may be another name. In addition, the name of the new DCI format for the uplink preemption may be obtained by replacing "4" of the DCI format 2_4 with any character string other than "0", "1", "2", and "3", or may be another name.

The new DCI format may have a size that can be set for some fields, or the number of bits of some fields can be reduced as compared with Rel. 15. The minimum DCI size of this DCI format may be obtained by reducing a DCI format size (up to 44 bits) of fallback DCI of Rel. 15 by 10 to 16 bits.

The maximum DCI size of the new DCI format may be larger than that of the fallback DCI of Rel. 15. The size of this DCI format may be able to be aligned with the size of the fallback DCI of Rel. 15 (or for the eMBB). If necessary, zero padding may be performed.

The fallback DCI is, for example, DCI transmitted in at least one of a common search space (CSS) or a user terminal-specific search space (UE-specific search space (USS)), and may be DCI whose configuration (contents, payload size, or the like) cannot be set by UE-specific higher layer signaling (for example, radio resource control (RRC) signaling). The fallback DCI may be used before RRC connection.

The fallback DCI for scheduling a physical downlink shared channel (PDSCH) may be referred to as a DCI format 1_0, and the fallback DCI for scheduling a physical uplink shared channel (PUSCH) may be referred to as a DCI format 0_0. Note that the configuration (contents, payload, or the like) of the fallback DCI may be settable by higher layer signaling (for example, broadcast information, system information, and the like) common to UEs.

Non-fallback DCI is, for example, DCI transmitted in the USS, and may be DCI whose configuration (contents, payload size, or the like) can be set by UE-specific higher layer signaling (for example, RRC signaling). The fallback DCI may be used after the RRC connection.

The non-fallback DCI for scheduling the PDSCH may be referred to as a DCI format 1_1, and the non-fallback DCI for scheduling the PUSCH may be referred to as a DCI format 0_1.

The configuration (contents, payload size, or the like) of the new DCI format may be set by higher layer signaling.

### <Priority setting>

Further, in the NR after Rel. 16, setting priorities at a plurality of levels (for example, two levels) for a predetermined signal or channel is being studied. For example, it is assumed that communication is controlled (for example, transmission control at the time of collision, and the like) by setting different priorities for every signal or channel each corresponding to different traffic types (also referred to as services, service types, communication types, use cases, and the like). This makes it possible to control communication by setting, for the same signal or channel, different priorities depending on a service type or the like.

The priority may be set for a signal (for example, UCI such as HARQ-ACK and a reference signal), a channel (PDSCH, PUSCH, or the like), a HARQ-ACK codebook, or the like. The priority may be defined by a first priority (for example, High) and a second priority (for example, Low) that is lower than the first priority. Alternatively, three or more types of priorities may be set. The information regarding the priority may be notified from a base station to the UE by using at least one of higher layer signaling and DCI.

For example, a priority may be set for HARQ-ACK for PDSCH that is dynamically scheduled, HARQ-ACK for semi-persistent PDSCH (SPS PDSCH), and HARQ-ACK for SPS PDSCH release. Alternatively, priorities may be set for HARQ-ACK codebooks corresponding to these HARQ-ACKs. Note that, in a case where a priority is set to the PDSCH, the priority of the PDSCH may be replaced with the priority of HARQ-ACK for the PDSCH.

In addition, priority may be set to a dynamic grant-based PUSCH, a configured grant-based PUSCH, or the like.

A UE may control UL transmission based on the priorities in a case where different UL signals or UL channels conflict. For example, control may be performed so that UL transmission with high priority is performed and that UL transmission with low priority is not performed (for example, to drop). Alternatively, transmission timing of UL transmission with low priority may be changed (for example, to defer or to shift).

The collision between different UL signals/UL channels may be a case where time resources (or time resources and frequency resources) of the different UL signals or UL channels overlap with each other or a case where transmission timing of the different UL signals or UL channels overlap with each other.

When scheduling of shared channels having different priorities is performed using DCI, how to control a plurality of DCI formats used for scheduling the shared channel and the priority of the shared channel scheduled by the DCI will have to be considered. The shared channels with different priorities may be PDSCHs with different HARQ-ACK priorities or PUSCHs with different priorities.

For example, it is conceivable to control scheduling of shared channels having different priorities by using one of an existing DCI format (for example, DCI format 0_1/1_1) supported in Rel. 15 or a new DCI format (for example, DCI format 0_2/1_2). If the UE is configured to monitor one of the existing DCI format or the new DCI format, the existing DCI format or the new DCI format may support scheduling both of the first priority (or URLLC) and the second priority (or eMBB).

On the other hand, when the UE is configured to monitor a plurality of DCI formats, how to configure the DCI format to be used for transmitting a shared channel having a given priority (for example, the first priority) will have to be considered.

In addition, when simultaneous scheduling of shared channels having a given priority (for example, the first priority) is allowed using a plurality of DCI formats, how to control processing times (for example, it is also referred to as a process timeline or a processing timelines) of shared channels scheduled in different DCI formats or shared channels having different priorities will have to be considered.

The present inventors have studied a plurality of formats of downlink control information and priorities set for signals or channels, and conceived an aspect of the present embodiment.

Hereinafter, embodiments according to the present disclosure will be described in detail with reference to the drawings. The following aspects may be applied independently or may be applied in combination.

In the present disclosure, the shared channel may be replaced with at least one of the PDSCH and the PUSCH. In addition, the traffic type priority (for example, traffic type priority) may be replaced with a physical downlink shared channel (for example, PDSCH with different HARQ-ACK priorities) having different HARQ-ACK priorities or a physical uplink shared channel (PUSCH with different priorities, for example) having different priorities.

In addition, in the following description, a first priority (High) and a second priority (Low) will be described as examples of priorities, however, the number and type of the priority are not limited thereto. Three or more types (or three or more levels) of priorities may be applied. Furthermore, a priority set to each signal or channel may be set in a UE by higher layer signaling or the like.

### (First Aspect)

In the first aspect, a DCI format supporting scheduling of a downlink shared channel with a given priority (for example, the first priority, or the high traffic priority) is described.

In the following description, the DCI format #0 may correspond to at least one of the DCI formats 0_0 and 0_1, the DCI format #1 may correspond to at least one of the DCI formats 1_0 and 1_1, and the DCI format #2 may correspond to at least one of the DCI formats 2_0 and 2_1.

When the UE is configured to monitor a plurality of DCI formats, the plurality of DCI formats may be configured to support scheduling of a shared channel (for example, high traffic priority data) having a given priority. Alternatively, when the UE is configured to monitor a plurality of DCI formats, only a specific DCI format (for example, one DCI format) may be configured to support scheduling of a shared channel having a given priority.

For example, at least one of the following options 1-1 to 1-4 may be applied.

### <Option 1-1>

It may be supported (or allowed) that the DCI format #1 and the DCI format #2 simultaneously schedule a shared channel having a given priority.

It is assumed that the UE is configured to monitor a plurality of DCI formats (for example, DCI format #1 and DCI format #2). The UE may set the DCI format to be monitored by higher layer signaling or the like via the network (for example, a base station).

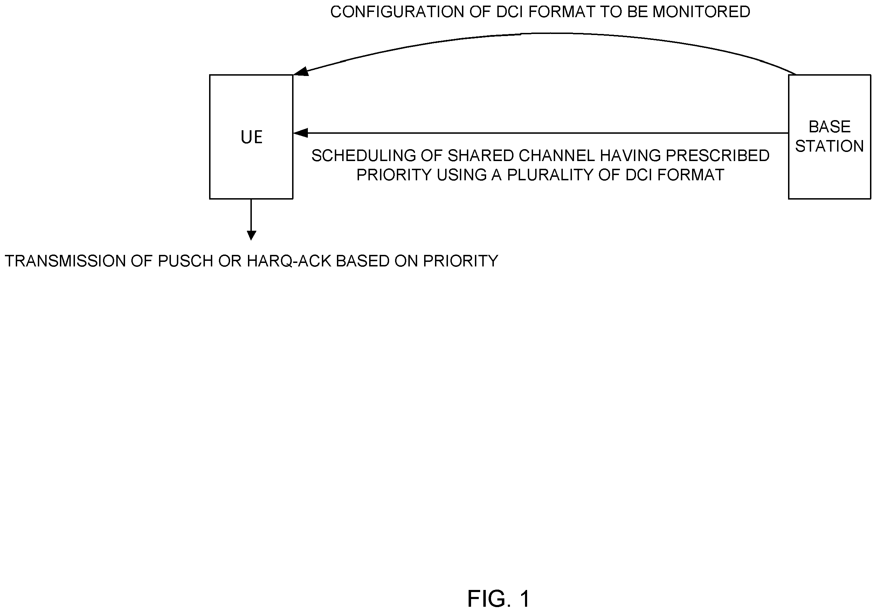

The UE may perform DCI reception processing assuming that there is a case where shared channels having given priorities are simultaneously scheduled in the DCI format #1 and the DCI format #2 (see Fig. 1). Furthermore, the UE may perform transmission processing of HARQ-ACK, transmission processing of PUSCH, or the like based on the priority of each shared channel.

In this case, each of the shared channel with the first priority and the shared channel with the second priority may be scheduled by the DCI format #1, and each of the shared channel with the first priority and the shared channel with the second priority may be respectively scheduled by the DCI format #2.

As described above, the plurality of DCI formats support scheduling of the shared channel having the given priority, so that the scheduling of the shared channel can be flexibly controlled. As a result, it is possible to achieve reliability and low latency of the shared channel (for example, URLLC).

Further, when the UE is configured to monitor the DCI format #0, the DCI format #1, and the DCI format #2, the DCI format #0 may be configured not to support scheduling of a shared channel having a given priority.

### <Option 1-2>

It may be supported (or allowed) that the DCI format #0 and the DCI format #2 simultaneously schedule a shared channel having a given priority.

It is assumed that the UE is configured to monitor a plurality of DCI formats (for example, the DCI format #0 and the DCI format #2). The UE may set the DCI format to be monitored by higher layer signaling or the like via the network (for example, a base station).

The UE may perform DCI reception processing assuming that there is a case where shared channels having given priorities are simultaneously scheduled in the DCI format #0 and the DCI format #2 (see Fig. 1). Furthermore, the UE may perform transmission processing of HARQ-ACK, transmission processing of PUSCH, or the like based on the priority of each shared channel.

In this case, each of the shared channel with the first priority and the shared channel with the second priority may be scheduled by the DCI format #0, and each of the shared channel with the first priority and the shared channel with the second priority may be respectively scheduled by the DCI format #2.

As described above, the plurality of DCI formats support scheduling of the shared channel having the given priority, so that the scheduling of the shared channel can be flexibly controlled. As a result, it is possible to achieve reliability and low latency of the shared channel (for example, URLLC).

Further, when the UE is configured to monitor the DCI format #0, the DCI format #1, and the DCI format #2, the DCI format #1 may be configured not to support scheduling of a shared channel having a given priority.

### <Option 1-3>

It may be supported (or allowed) that the DCI format #0, the DCI format #1, and the DCI format #2 simultaneously schedule a shared channel having a given priority.

It is assumed that the UE is configured to monitor a plurality of DCI formats (for example, the DCI format #0, the DCI format #1, and the DCI format #2). The UE may set the DCI format to be monitored by higher layer signaling or the like via the network (for example, a base station).

The UE may perform DCI reception processing assuming that there is a case where shared channels having given priorities are simultaneously scheduled in the DCI format #0, the DCI format #1, and the DCI format #2 (see Fig. 1). Furthermore, the UE may perform transmission processing of HARQ-ACK, transmission processing of PUSCH, or the like based on the priority of each shared channel.

In this case, each of the shared channel with the first priority and the shared channel with the second priority may be scheduled by the DCI format #0, each of the shared channel with the first priority and the shared channel with the second priority may be scheduled by the DCI format #1, and each of the shared channel with the first priority and the shared channel with the second priority may be scheduled by the DCI format #2.

As described above, the plurality of DCI formats support scheduling of the shared channel having the given priority, so that the scheduling of the shared channel can be flexibly controlled. As a result, it is possible to achieve reliability and low latency of the shared channel (for example, URLLC).

### <Option 1-4>

The specific DCI format only (for example, the DCI format #2) may be configured to schedule a shared channel having a given priority.

It is assumed that the UE is configured to monitor a plurality of DCI formats (for example, at least one of the DCI format #0 and the DCI format #1, and the DCI format #2). The UE may set the DCI format to be monitored by higher layer signaling or the like via the network (for example, a base station).

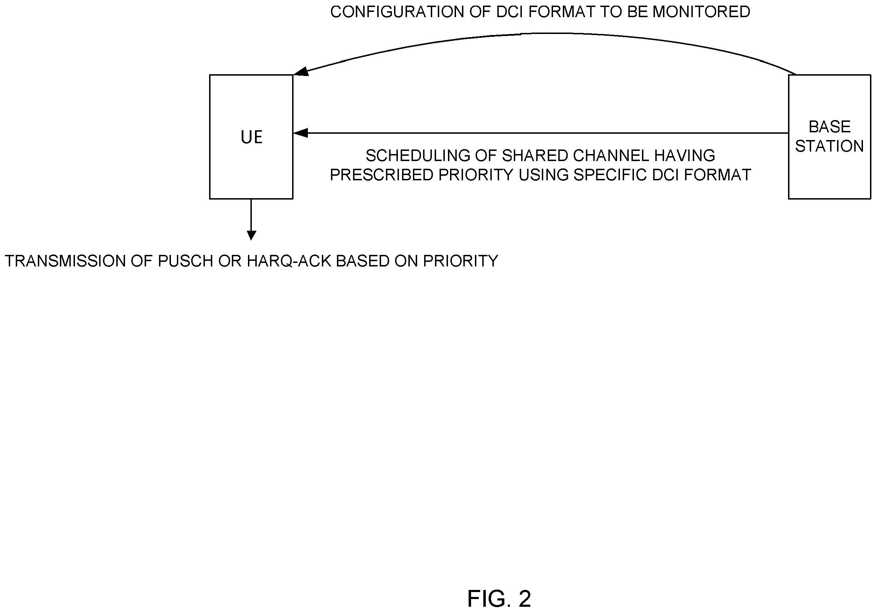

The UE may perform DCI reception processing assuming that a shared channel having given priority is scheduled in the DCI format #2 (see Fig. 2). Furthermore, the UE may perform transmission processing of HARQ-ACK, transmission processing of PUSCH, or the like based on the priority of each shared channel.

That is, the UE may assume that a shared channel having a given priority is not scheduled in a DCI format other than the DCI format #2 (for example, the DCI format #0 or the DCI format #1).

In this case, the shared channel with the first priority may be scheduled by the DCI format #0 or the DCI format #1, and each of the shared channel with the first priority and the shared channel with the second priority may be scheduled by the DCI format #2.

As described above, the specific DCI format only supports scheduling of the shared channel having the given priority, so that the operation of the UE and the base station can be simplified.

Note that, when the UE is configured to monitor a DCI format other than the DCI format #2 (for example, at least one of the DCI format #0 and the DCI format #1), a shared channel having a given priority can be scheduled by the DCI format #0 or the DCI format #1. That is, in a case where monitoring of the DCI format # 2 is configured, the scheduling of the shared channel having a given priority may be restricted to the DCI format # 2, and in other cases, the scheduling of the shared channel having a given priority may be allowed in other DCI formats.

### <Variations>

Note that, although the option 1 to the option 4 are applied to the priority of the HARQ-ACK for the PDSCH scheduled by the DCI and the priority of the PUSCH scheduled by the DCI, the present invention is not limited thereto. The HARQ-ACK for the PDSCH scheduled by the DCI (for example, DCI format 1_0, 1_1, or 2_1) and the PUSCH scheduled by the DCI (for example, the DCI format 0_ 0, 1_0, or 2_0) may be separately controlled (for example, different options are applied).

### (Second Aspect)

In the second aspect, a process timeline (for example, processing time) applied to or configured for a shared channel scheduled by DCI will be described.

Different process timelines may be supported for shared channels with different priorities (or traffic priority) (Option 2-1). Alternatively, the same process timelines may be supported for shared channels with different priorities (or traffic priorities) (Option 2-2).

The process time line may be a time (for example, the number of symbols) from when the DCI is transmitted (or received at the UE) to when transmission or allocation of the PDSCH is allowed. Alternatively, the process time line may be a time (for example, the number of symbols) from when the DCI is transmitted (or received at the UE) to when transmission or allocation of the PUSCH is allowed. Alternatively, the process time line may be a time (for example, the number of symbols) from when the DCI or PDSCH is transmitted (or received at the UE) to when transmission of the HARQ-ACK for the PDSCH is allowed.

### <Option 2-1>

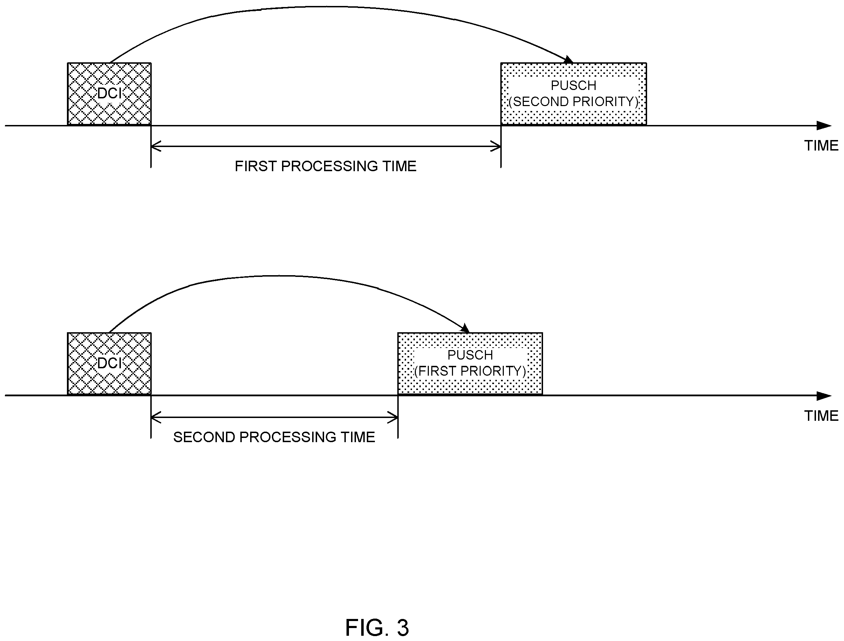

Different processing time (process timeline) may be supported for shared channels with different priorities (or traffic priority) (see Fig. 3). Although Fig. 3 illustrates the process timeline corresponding to the PUSCH, the present invention may be applied to a process timeline corresponding to the PDSCH or the HARQ-ACK.

Fig. 3 illustrates a case where the first processing time is set for the shared channel with the second priority and the second processing time is set for the shared channel with the first priority. Here, a case where the second processing time is set shorter than the first processing time is illustrated, but the present invention is not limited thereto.

Information regarding the first processing time and the second processing time (a time length, the number of symbols, or the like) may be defined in the specification, or may be set in the UE by the base station using higher layer signaling or the like.

In addition, a case where different processing times are supported for shared channels having different priorities may be the following case.

### <Case 1>

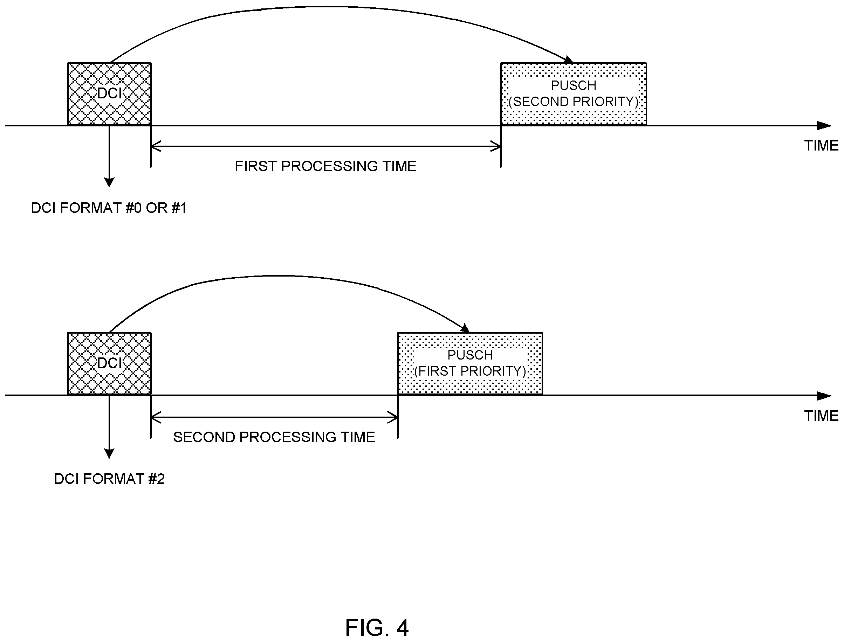

Case 1 may be a case where the DCI format # 2 schedules a shared channel with the first priority (or high priority traffic) and another DCI format (for example, DCI format #0 or #1) schedules the second priority (or low priority traffic) (see Fig 4).

The UE may apply the second processing time to the shared channel (for example, the shared channel of the first priority) scheduled in the DCI format #2. On the other hand, the UE may apply the first processing time to the shared channel (for example, the shared channel with the second priority) scheduled in the DCI format #0 or #1.

If the DCI format #2 schedules only the shared channel with the first priority, the UE may determine a processing time to apply based on the DCI format. The correspondence relationship between the DCI format and the priority may be configured in the UE, using higher layer signaling, for example.

### <Case 2>

Case 2 may be a case where the DCI format #0 or #1 schedules a shared channel with the first priority (or high priority traffic) and another DCI format (for example, DCI format #2) schedules the second priority (or low priority traffic).

The UE may apply the second processing time to the shared channel (for example, the shared channel with the first priority) scheduled in the DCI format #0 or #1. On the other hand, the UE may apply the first processing time to the shared channel (for example, the shared channel with the second priority) scheduled in the DCI format #2.

### <Case 3>

In Case 1 or Case 2 described above, a case where each DCI format schedules a shared channel having a given priority has been described, but the present invention is not limited thereto. For example, if each DCI format (for example, the DCI format #2) schedules the shared channel with the first priority and the shared channel with the second priority separately, the UE may determine a processing time to apply based on the priority of the shared channel.

### <Option 2-2>

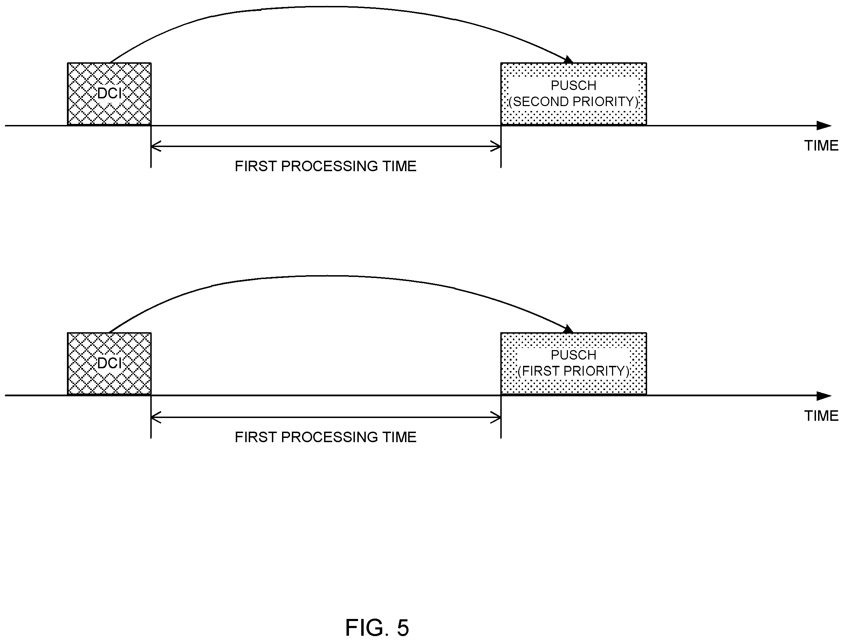

The same processing time (process timeline) may be supported for shared channels with different priorities (or traffic priority) (see Fig. 5). Although Fig. 5 illustrates the process timeline corresponding to the PUSCH, the present invention may be applied to a process timeline corresponding to the PDSCH or the HARQ-ACK.

Fig. 5 illustrates a case where the first processing time is set for the shared channel with the first priority and the shared channel with the second priority. The UE applies a common processing time regardless of the priority of the shared channel. This makes it possible to simplify the operation of transmission processes on the UE.

### (Third Aspect)

In the third aspect, a method in which a UE determines a priority of a shared channel is described. Note that the third aspect can be applied in combination with the first aspect or the second aspect described above.

The UE may determine the priority of each signal (for example, the priority of the PUSCH or the priority of the HARQ-QACK for the PDSCH) based on given information. The given information may be information notified from the base station to the UE, or may be transmission requirements or transmission parameters applied to the DCI transmitted to the UE.

For example, the UE may determine the priority based on any of the following options 3-1 to 3-6:

### <Option 3-1>

The UE may determine the priority based on the bit information in a given field included in the DCI. For example, the UE may determine the priority of the HARQ-ACK for the PDSCH based on the given field of DCI for scheduling the PDSCH. Alternatively, the UE may determine the priority of a PUSCH based on the given field of DCI for scheduling the PUSCH.

### <Option 3-2>

The UE may determine the priority based on a DCI format. For example, the UE may determine the priority of the HARQ-ACK for the PDSCH based on a format of DCI for scheduling the PDSCH. Alternatively, the UE may determine the priority of a PUSCH based on a format of DCI for scheduling the PUSCH.

As an example, the UE may determine that the priority is the first priority when the DCI format for scheduling the shared channel is a specific DCI format (for example, DCI format #2), and determine that the priority is the second priority when the DCI format is another DCI format.

### <Option 3-3>

The UE may determine the priority based on the size of the DCI format (or the size of the DCI). For example, the UE may determine the priority of the HARQ-ACK for a PDSCH based on the size of the DCI format for scheduling the PDSCH. Alternatively, the UE may determine the priority of a PUSCH based on the size of the DCI format for scheduling the PUSCH.

As an example, the UE may determine that the priority is the first priority when the size of the DCI format for scheduling the shared channel is smaller than or equal to a certain value, and determine that the priority is the second priority when the size is larger than a certain value. Alternatively, the UE may determine that the priority is the second priority when the size of the DCI format for scheduling the shared channel is smaller than or equal to a certain value, and may determine that the priority is the first priority when the size is larger than a certain value.

### <Option 3-4>

The UE may determine the priority based on a RNTI type applied to the DCI. For example, the UE may determine the priority of the HARQ-ACK for a PDSCH based on a RNTI type applied to the DCI for scheduling the PDSCH. Alternatively, the UE may determine the priority of a PUSCH based on a RNTI type applied to the DCI for scheduling the PUSCH.

As an example, the UE may determine that the priority is the first priority when the DCI is CRC-scrambled with the first RNTI type, and determine that the priority is the second priority when the DCI is CRC-scrambled with the second RNTI type.

### <Option 3-5>

The UE may determine the priority based on a search space type for transmitting the DCI. For example, the UE may determine that the priority is the first priority when the DCI scheduling the shared channel is transmitted in the common search space (for example, the common search space), and determine that the priority is the second priority when the DCI is transmitted in the UE specific search space. Alternatively, the UE may determine that the priority is the first priority when the DCI is transmitted in the UE specific search space, and determine that the priority is the second priority when the DCI is transmitted in the common search space.

### <Option 3-6>

The UE may determine the priority based on upper layer parameters (for example, the RRC parameter). The priority may be commonly set for the DCI transmission requirements or parameters (for example, the DCI format), or may be separately set for each DCI format.

### (Radio Communication System)

Hereinafter, a configuration of a radio communication system according to an embodiment of the present disclosure will be described. In this radio communication system, communication is performed using one or a combination of the radio communication methods according to the embodiments of the present disclosure.

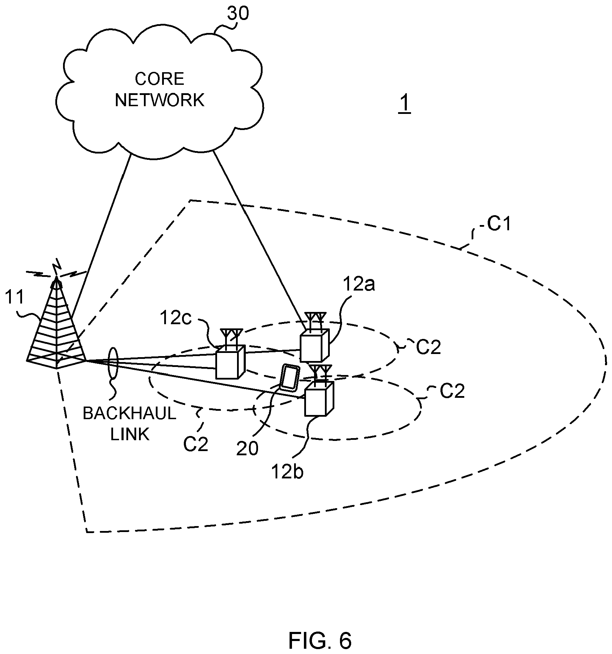

Fig. 6 is a diagram illustrating an example of a schematic configuration of a radio communication system according to an embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI for scheduling the PDSCH may be referred to as DL assignment, DL DCI, or the like, and DCI for scheduling the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a "user terminal-specific reference signal (UE-specific reference signal)".

### (Base Station)

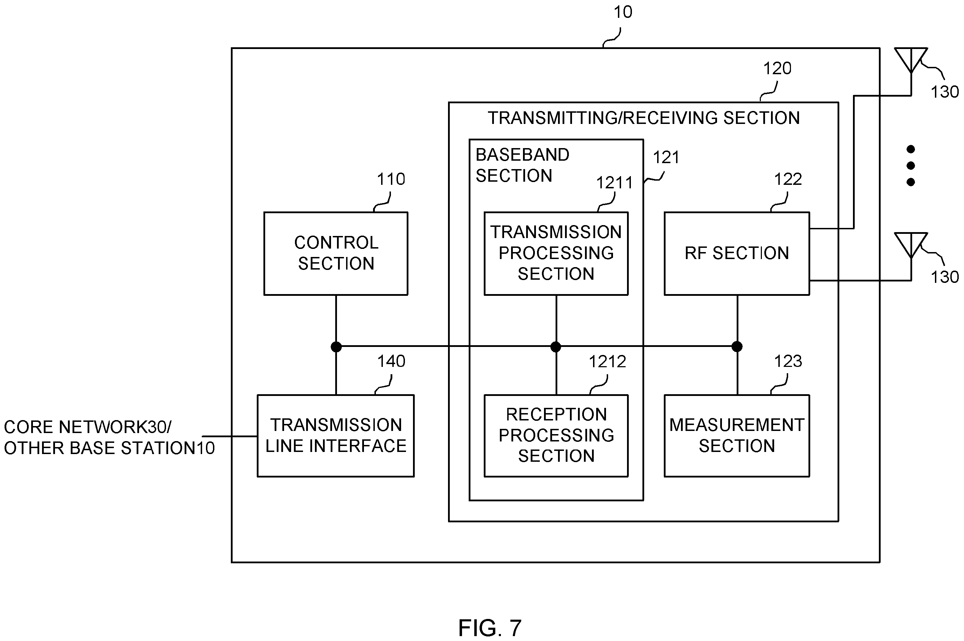

Fig. 7 is a diagram illustrating an example of a configuration of a base station according to an embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be configured by a controller, a control circuit, or the like, which is described based on common recognition in the technical field to which the present disclosure relates.

The control section 110 may control signal generation, scheduling (for example, resource assignment or mapping), and the like. The control section 110 may control transmission/reception, measurement, and the like using the transmitting/receiving section 120, the transmission/reception antenna 130, and the transmission line interface 140. The control section 110 may generate data to be forwarded as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be configured by a transmitter/receiver, an RF circuit, a base band circuit, a filter, a phase shifter, a measurement circuit, a transmission/reception circuit, and the like, which are described based on common recognition in the technical field to which the present disclosure relates.

The transmitting/receiving section 120 may be configured as an integrated transmitting/receiving section, or may be constituted by a transmitting section and a receiving section. The transmitting section may be configured by the transmission processing section 1211 and the RF section 122. The receiving section may be configured by the reception processing section 1212, the RF section 122, and the measurement section 123.

The transmission/reception antenna 130 can be configured by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

On the other hand, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correcting decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be configured by at least one of the transmitting/receiving section 120, the transmission/reception antenna 130, and the transmission line interface 140.

The transmitting/receiving section 120 may transmit the downlink control information used for the schedule of at least one of the shared channel having the first priority and the shared channel having the second priority lower than the first priority. The transmitting/receiving section 120 may receive the shared channel scheduled by the downlink control information or a delivery acknowledgement signal for the shared channel.

The control section 110 may control the shared channel having the first priority so as to be scheduled by each piece of the downlink control information with different formats (for example, a plurality of DCI formats). Alternatively, the control section 110 may control the shared channel having the first priority to be scheduled by the downlink control information in a specific format.

### (User terminal)

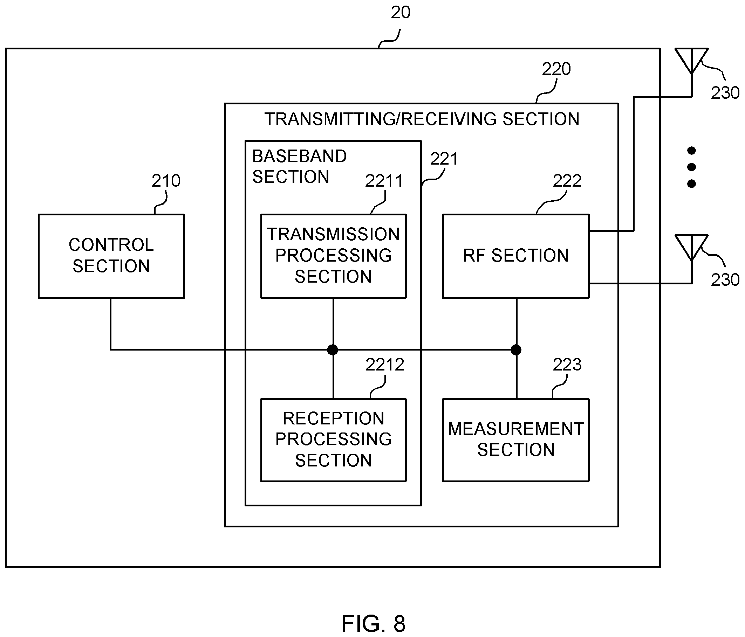

Fig. 8 is a diagram illustrating an example of a configuration of user terminal according to an embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be included.

Note that, although this example mainly describes a functional block which is a characteristic part of the present embodiment, the user terminal 20 may be assumed also to have another functional block that is necessary for radio communication. A part of processing of each section described below may be omitted.

The control section 210 controls an entire user terminal 20. The control section 210 can include a controller, a control circuit, or the like, which is described based on common recognition in a technical field according to the present disclosure.

The control section 210 may control signal generation, mapping, or the like. The control section 210 may control transmission/reception, measurement, and the like using the transmitting/receiving section 220 and the transmission/reception antenna 230. The control section 210 may generate data to be transmitted as a signal, control information, a sequence, or the like, and transfer the data, the control information, the sequence, or the like to the transmitting/receiving section 220.

The transmitting/receiving section 220 may include a baseband section 221, an RF section 222, or a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, or the like, which is described based on common recognition in a technical field according to the present disclosure.

The transmitting/receiving section 220 may be constituted as an integrated transmitting/receiving section, or may be constituted by a transmitting section and a receiving section. The transmitting section may be configured by the transmission processing section 2211 and the RF section 222. The receiving section may include the reception processing section 2212, the RF section 222, or the measurement section 223.

The transmission/reception antenna 230 can include an antenna, for example, an array antenna, or the like, which is described based on common recognition in a technical field according to the present disclosure.

The transmitting/receiving section 220 may receive the above-described downlink channel, synchronization signal, Downlink Reference Signal, or the like. The transmitting/receiving section 220 may transmit the above-described uplink channel, Uplink Reference Signal, or the like.

The transmitting/receiving section 220 may form at least either a transmission beam or a reception beam by using digital beam forming (for example, precoding), analog beam forming (for example, phase rotation), or the like.

On data, control information, or the like acquired from the control section 210 for example, the transmitting/receiving section 220 (transmission processing section 2211) may perform processing of a PDCP layer, processing of an RLC layer (for example, RLC retransmission control), processing of an MAC layer (for example, HARQ retransmission control), and may generate a bit string to be transmitted.

On the bit string to be transmitted, the transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion, and may output a baseband signal.

Note that whether or not to apply DFT processing may be determined based on a configuration of transform precoding. In a case where transform precoding is enabled for a certain channel (for example, PUSCH), the transmitting/receiving section 220 (transmission processing section 2211) may perform DFT processing as the above-described transmission processing in order to transmit the channel by using a DFT-s-OFDM waveform. In a case where transform precoding is not enabled for a certain channel (for example, PUSCH), the transmitting/receiving section 220 (transmission processing section 2211) does not need to perform DFT processing as the above-described transmission processing.

The transmitting/receiving section 220 (RF section 222) may perform modulation to a radio frequency range, filtering processing, amplification, or the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, or the like on the signal in the radio frequency range received by the transmission/reception antenna 230.

To acquire user data, or the like, the transmitting/receiving section 220 (reception processing section 2212) may apply, to the acquired baseband signal, reception processing such as analog-digital conversion, FFT processing, IDFT processing (if necessary), filtering processing, demapping, demodulation, decoding (which may include error correcting decoding), MAC layer processing, processing of an RLC layer, processing of a PDCP layer, or the like.

The transmitting/receiving section 220 (measurement section 223) may perform measurement related to the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the transmitting section and the receiving section of the user terminal 20 in the present disclosure may include at least one of the transmitting/receiving section 220 and the transmission/reception antenna 230.

Note that the transmitting/receiving section 220 may receive the downlink control information used for the schedule of at least one of the shared channel having the first priority and the shared channel having the second priority lower than the first priority. The transmitting/receiving section 220 may transmit the shared channel scheduled by the downlink control information or a delivery acknowledgement signal for the shared channel.

The control section 110 may control transmission of the shared channel or transmission of the delivery acknowledgement signal for the shared channel based on the downlink control information.

The shared channel having the first priority may be scheduled by each piece of the downlink control information with different formats (for example, a plurality of DCI formats). Alternatively, the shared channel having the first priority may be scheduled by the downlink control information in a specific format.

Different process timelines may be supported for the shared channel having the first priority and the shared channel having the second priority.

The control section 110 may apply different process timelines for the shared channel having the first priority and the shared channel having the second priority when the shared channel having the first priority is scheduled by the downlink control information of the first format and the shared channel having the second priority is scheduled by the downlink control information of the second format.

The same process timelines may be supported for the shared channel having the first priority and the shared channel having the second priority.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) and using these apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

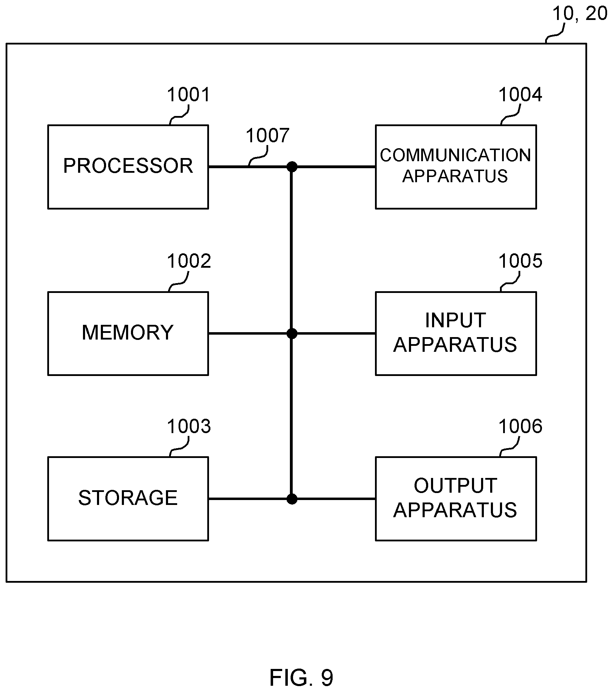

For example, the base station, the user terminal, or the like according to an embodiment of the present disclosure may function as a computer that executes processing a radio communication method in the present disclosure. Fig. 9 is a diagram illustrating an example of a hardware configuration of a base station and user terminal according to an embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may include one or a plurality of apparatuses illustrated in the figure, or does not have to include some apparatuses.

For example, although only one processor 1001 is illustrated, a plurality of processors may be provided. Further, the processing may be executed by one processor, or the processing may be executed simultaneously, in sequence or using other different methods by two or more processors. Note that the processor 1001 may be implemented with one or more chips.

Each of functions of the base station 10 and the user terminal 20 is implemented by, for example, the processor 1001 executing an operation by reading predetermined software (program) on hardware such as the processor 1001 or the memory 1002, controlling communication via the communication apparatus 1004, and controlling at least one of reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), or the like may be implemented by the processor 1001.

Furthermore, the processor 1001 reads programs (program codes), software modules, or data, from at least one of the storage 1003 and the communication apparatus 1004, into the memory 1002, and executes various processes according to these. As the program, a program to cause a computer to execute at least a part of the operation described in the above-described embodiment is used. For example, the control section 110 (210) may be implemented by a control program that is stored in the memory 1002 and operates in the processor 1001, and other functional blocks may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as "secondary storage apparatus."

The communication apparatus 1004 is hardware (transmission/reception device) for performing inter-computer communication through at least one of a wired network or a radio network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. In the transmitting/receiving section 120 (220), implementation may be made in which a transmitting section 120a (220a) and a receiving section 120b (220b) are separated from each other physically or logically.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, and the like). Note that the input apparatus 1005 and the output apparatus 1006 may be provided in an integrated structure (for example, a touch panel).

Furthermore, these pieces of apparatus, including the processor 1001, the memory 1002 and the like are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or plurality of periods (frames) included in the radio frame may be referred to as a subframe. Further, the subframe may include one or a plurality of slots in the time domain. A subframe may be a fixed time duration (for example, 1 ms) that is not dependent on numerology.

Here, the numerology may be a communication parameter applied to at least one of transmission or reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and a specific windowing processing performed by the transceiver in the time domain.

A slot may include one or a plurality of symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or a plurality of symbols in the time domain. Further, the mini slot may be referred to as a sub slot. Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B."

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and the like, instead of a "subframe."

Here, a TTI refers to the minimum time unit of scheduling in radio communication, for example. For example, in the LTE system, a base station performs scheduling to allocate radio resources (a frequency bandwidth and transmit power that can be used in each user terminal and the like) to each user terminal in TTI units. Note that the definition of TTIs is not limited to this.

The TTI may be the transmission time unit of channel-encoded data packets (transport blocks), code blocks, codewords and the like, or may be the unit of processing in scheduling, link adaptation and the like. When TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Also, an RB may include one or more symbols in the time domain, and may be one slot, one mini slot, one subframe or one TTI in length. One TTI and one subframe each may be comprised of one or more resource blocks.

Note that one or a plurality of RBs may be referred to as a physical resource block (physical RB (PRB)), a subcarrier group (SCG), a resource element group (REG), a PRB pair, an RB pair, or the like.

Further, the resource block may include one or a plurality of resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or a plurality of BWPs may be configured within one carrier.

At least one of the configured BWPs may be active, and it may not be assumed that the UE transmits and receives a predetermined signal/channel outside the active BWP. Note that a "cell", a "carrier", or the like in the present disclosure may be replaced with the "BWP".

Note that the structures of radio frames, subframes, slots, mini slots, symbols and so on described above are merely examples. For example, configurations such as the number of subframes included in the radio frame, the number of slots per subframe or radio frame, the number of mini slots included in the slot, the number of symbols and RBs included in the slot or mini slot, the number of subcarriers included in the RB, the number of symbols in the TTI, the symbol length, the cyclic prefix (CP) length, and the like can be variously changed.

Also, the information and parameters described in the present disclosure may be represented in absolute values or in relative values with respect to predetermined values, or may be represented using other applicable information. For example, a radio resource may be specified by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and the like may be input and output via a plurality of network nodes.

The information, signals and the like that are input and/or output may be stored in a specific location (for example, in a memory), or may be managed in a control table. The information, signal, and the like to be input and output can be overwritten, updated or appended. The output information, signal, and the like may be deleted. The information, signals and the like that are input may be transmitted to other pieces of apparatus.

Notification of information may be performed not only by using the aspects/embodiments described in the present disclosure but also by using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, notification of the MAC signaling may be given by using, for example, a MAC control element (MAC control element (CE)).

Also, notification of predetermined information (for example, notification of information to the effect that "X holds") does not necessarily have to be sent explicitly, and can be sent implicitly (for example, by not notifying this piece of information, by notifying another piece of information, and the like).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

Also, software, commands, information and so on may be transmitted and received via communication media. For example, in a case where software is transmitted from a website, a server, or another remote source by using at least one of a wired technology (coaxial cable, optical fiber cable, twisted-pair, digital subscriber line (DSL), or the like) or a radio technology (infrared rays, microwaves, or the like), at least one of the wired technology or the radio technology is included within a definition of the transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station or a base station subsystem that provide a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be referred to as a transmission apparatus, a reception apparatus, a radio communication apparatus, or the like. Note that at least one of the base station and the mobile station may be a device mounted on a moving body, a moving body itself, and the like. The moving body may be a transportation (for example, a car, an airplane and the like), an unmanned moving body (for example, a drone, an autonomous car, and the like), or a (manned or unmanned) robot. Note that at least one of the base station and the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Similarly, the user terminal in the present disclosure may be replaced with the base station. In this case, the base station 10 may have the function of the user terminal 20 described above.

In the present disclosure, the operation performed by the base station may be performed by an upper node thereof in some cases. In a network including one or a plurality of network nodes including the base station, it is clear that various operations performed for communication with the terminal can be performed by the base station, one or more network nodes (for example, a mobility management entity (MME), a serving-gateway (S-GW), and the like are conceivable, but not limited thereto) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), Global System for Mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), or another appropriate radio communication method, a next generation system extended on the basis of these, and the like. Further, a plurality of systems may be combined (for example, a combination of LTE or LTE-A and 5G) and applied.

The phrase "based on/on the basis of" as used in the present disclosure does not mean "based only on/on the basis only of", unless otherwise specified. In other words, the phrase "based on/on the basis of" means both "based only on/on the basis only of" and "based at least on/on the basis at least of."

Reference to elements with designations such as "first," "second" and the like as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, or the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and the like.

In addition, to "judge" and "determine" as used herein may be interpreted to mean making judgements and determinations related to resolving, selecting, choosing, establishing, comparing and the like. In other words, to "judge" and "determine" as used herein may be interpreted to mean making judgements and determinations related to some operation.

In addition, to "judge" and "determine" as used herein may be replaced with "assuming", "expecting", "considering" and the like.

The term "maximum transmit power" described in the present disclosure may mean the maximum value of transmit power, the nominal UE maximum transmit power, or the rated UE maximum transmit power.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the description may mean that "A and B are different from C". Terms such as "leave", "coupled", or the like may also be interpreted in the same manner as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2019-210013 filed on November 20, 2019. The contents of this are all incorporated herein.

## Claims

1. A terminal comprising:
a control section that controls monitoring of both a first downlink control information (DCI) format and a second DCI format used for scheduling of an uplink shared channel; and
a transmitting section that transmits the uplink shared channel based on at least one of the first DCI format and the second DCI format,
wherein when a first priority or a second priority that is lower than the first priority is configured for the uplink shared channel, scheduling of at least an uplink shared channel having a given priority is supported by the first DCI format and the second DCI format.

2. The terminal according to claim 1, wherein the first DCI format and the second DCI format support scheduling of both an uplink shared channel having the first priority and an uplink shared channel having the second priority.

3. The terminal according to claim 1 or 2, wherein the first DCI format is a DCI format 0_1 and the second DCI format is a DCI format 0_2.

4. The terminal according to claim 1, wherein only one of the first DCI format and the second DCI format is configured to schedule the uplink shared channel having the first priority.

5. The terminal according to claim 4, wherein the first DCI format is configured to schedule a physical shared channel having the second priority and does not support scheduling of a physical shared channel having the first priority, and the second DCI format supports scheduling of both a physical shared channel having the first priority and a physical shared channel having the second priority.

6. A radio communication method for a terminal, comprising:
controlling monitoring of both a first downlink control information (DCI) format and a second DCI format used for scheduling of an uplink shared channel; and
transmitting the uplink shared channel based on at least one of the first DCI format and the second DCI format,
wherein when a first priority or a second priority that is lower than the first priority is configured for the uplink shared channel, scheduling of at least an uplink shared channel having a given priority is supported by the first DCI format and the second DCI format.

7. A base station comprising:
a control section that controls a configuration of monitoring of both a first downlink control information (DCI) format and a second DCI format used for scheduling of an uplink shared channel; and
a receiving section that receives the uplink shared channel scheduled based on at least one of the first DCI format and the second DCI format,
wherein when a first priority or a second priority that is lower than the first priority is configured for the uplink shared channel, scheduling of at least an uplink shared channel having a given priority is supported by the first DCI format and the second DCI format.

8. A system comprising a terminal and a base station, wherein
the terminal comprises:
a control section that controls monitoring of both a first downlink control information (DCI) format and a second DCI format used for scheduling of an uplink shared channel; and
a transmitting section that transmits the uplink shared channel based on at least one of the first DCI format and the second DCI format, and
the base station comprises:
a control section that controls a configuration of monitoring of both the first DCI format and the second DCI format used for scheduling of the uplink shared channel; and
a receiving section that receives the uplink shared channel scheduled based on at least one of the first DCI format and the second DCI format,
wherein when a first priority or a second priority that is lower than the first priority is configured for the uplink shared channel, scheduling of at least an uplink shared channel having a given priority is supported by the first DCI format and the second DCI format.
